(19) Europäisches Patentamt
European Patent Office
Office européen des brevets

(11) **EP 1 261 669 B1**

(12) **EUROPÄISCHE PATENTSCHRIFT**

(45) Veröffentlichungstag und Bekanntmachung des Hinweises auf die Patenterteilung:
**26.10.2005 Patentblatt 2005/43**

(51) Int Cl.7: **C09D 17/00**, C08J 3/22

(21) Anmeldenummer: **01905772.8**

(86) Internationale Anmeldenummer:
**PCT/EP2001/001668**

(22) Anmeldetag: **15.02.2001**

(87) Internationale Veröffentlichungsnummer:
**WO 2001/064800 (07.09.2001 Gazette 2001/36)**

(54) **DISPERGIERUNG VON PIGMENTEN IN POLYOLEFINEN**

DISPERSION OF PIGMENTS IN POLYOLEFINS

DISPERSION DE PIGMENTS DANS DES POLYOLEFINES

(84) Benannte Vertragsstaaten:
**DE ES FR GB IT NL**

(30) Priorität: **01.03.2000 DE 10009752**
**20.12.2000 DE 10063423**

(43) Veröffentlichungstag der Anmeldung:
**04.12.2002 Patentblatt 2002/49**

(73) Patentinhaber: **Clariant GmbH**
**65929 Frankfurt am Main (DE)**

(72) Erfinder:
• **HOHNER, Gerd**
**86368 Gersthofen (DE)**
• **BOTT, Rainer**
**64521 Gross-Gerau (DE)**

• **HESS, Reiner**
**86368 Gersthofen (DE)**

(74) Vertreter: **Mikulecky, Klaus et al**
**Clariant Service GmbH**
**Patente, Marken, Lizenzen**
**Am Unisys-Park 1**
**65843 Sulzbach/Ts. (DE)**

(56) Entgegenhaltungen:
**EP-A- 0 719 802      EP-A- 0 890 584**
**EP-A- 0 902 045      EP-A- 1 013 672**

• **PATENT ABSTRACTS OF JAPAN vol. 1997, no. 02, 28. Februar 1997 (1997-02-28) & JP 08 269140 A (MITSUI PETROCHEM IND LTD), 15. Oktober 1996 (1996-10-15)**

## Beschreibung

Die vorliegende Erfindung bezieht sich auf ein Verfahren zur verbesserten Herstellung eines Färbemittels, bestehend aus mindestens einem Farbgeber, welcher sehr fein in einem schmelzbaren Basismaterial (Matrix) verteilt wird, das bei Raumtemperatur fest ist, sowie auf die Verwendung von Polyethylen Wachsen, die mit Hilfe von Metallocen-Katalysatoren hergestellt wurden, zur Verbesserung der Dispergierung des Färbemittels in einer Polyethylenmatrix zur Herstellung von Polyethylen-(LD)-Folien.

Färbemittel wie beispielsweise Pigment-Präparationen sind zur Herstellung von Masterbatches geeignet. Ein Masterbatch ist ein granulatförmiges, staubfreies Konzentrat eines plastomeren oder elastomeren Kunststoffs mit einem hohen Anteil eines Färbemittels. Masterbatches werden zur Färbung von Kunststoffen eingesetzt, wobei sie dem zu färbenden Kunststoff vor der Verarbeitung, z.B. im Spritzguss oder vor der Extrusion, zugesetzt werden. Die direkte Färbung von Kunststoffen mit reinen Farbstoffen vor der Verarbeitung hat sich technisch als nachteilig erwiesen, weil

a) die Verteilung des Färbemittels und damit die erreichte Farbintensität (Farbstärke) unzureichend ist, und

b) die Gesundheitsrisiken durch Färbemittelfeinstäube nicht abzuschätzen sind, und

c) die Kosten zur Apparatesäuberung nach dem Färbemitteleinsatz oder bei Wechsel des Färbemittels sehr hoch sind.

Es sind verschiedene Verfahren zur Herstellung von Masterbatches bekannt und beschrieben. Folgende Prozesse sind bei der Herstellung von Masterbatches technisch üblich:

a) die Heißmischung einer geeigneten Matrix (Polymere wie PVC oder Ethylen-Vinylacetat, auch LDPE) mit dem Färbemittel

b) Extrusion und Kneten mit anschließender Vermahlung des Farbkonzentrates, oder

c) Extrusion und anschließende Feinsprühung oder Heißabschlag an der Lochplatte.

Im Folgenden wird ein Überblick über den derzeitigen Stand der Technik bei Herstellung von staubfreien, pulver- oder granulatförmigen Farbstoff oder Pigmentkonzentraten gegeben.

WO-93/10192 beschreibt die Herstellung von Fluoreszenz-Pigment-Konzentraten unter Einsatz des Pigments, eines Polymers, das entweder ein Polyester, ein Melamin-Formaldehyd-Harz oder ein Triazin-Formaldehyd-Harz sein kann, eines Fluoreszenz-Farbstoffes und eines Copolymers aus Ethylen und Kohlenmonoxid als Dispergierhilfsmittel. Eine als Basisrezeptur angegebene Mischung enthält hier 0 bis 46 % Polyethylen, 35 % Fluoreszenzpigment, 10 % Füller, 2 % Titandioxid, 2 % Silcron® G-100 und 5 bis 51 % des wachsartigen Dispergierhilfsmittels, eines Copolymeren aus Kohlenmonoxid und Ethylen. Diese wachsartigen Dispergierhilfsmittel erhalten zwar durch ihren Kohlenmonoxid-Gehalt eine polare Funktionalität, die das Benetzen des Pigments erleichtert, diese Funktionalität ist aber von Nachteil, wenn man die Thermostabilität des entstehenden Pigmentkonzentrates betrachtet. Pigmentkonzentrate sind bei ihrer Herstellung und bei der anschließenden Verarbeitung, besonders bei mehrfacher Extrusion hohen Temperaturbelastungen ausgesetzt, d.h. eine zunehmende Eigenfarbe des Dispergierhilfsmittels unter dieser Temperaturbelastung ist hier ein technischer Nachteil.

EP-A-0 705 875 beschreibt einen universellen Masterbatch zur Zugabe von Füllern und speziell von Pigmenten zu Polymeren, der zu maximal 85 % aus einem Füller (z.B. Ruß, Titandioxid oder Ultramarin-Blau) besteht und zu maximal 25 % aus einem Viskositätseinstellungs-Hilfsmittel, nämlich entweder Ethylen-bisstearylamid (EBS-Wachs), Polybutylen oder Hotmelt-Acrylaten und einer dritten Komponente, die den Rest des Gemisches ausmacht, nämlich Styrol-Butadien-Block-Copolymere. Das Gemisch enthält darüber hinaus noch als Verarbeitungshilfsmittel entweder ein Metall-Stearat oder Stearinsäure, andere organische Stearate oder ein Fluorelastomer, insgesamt maximal 2 Gew.-%. Weiterhin ist noch ein Antioxidans im Gemisch enthalten. Der anorganische Pigmentanteil liegt bei 30 bis 60 %. Die Mischungen sind relativ komplex, als Qualitätskriterien werden die mechanischen Eigenschaften der Endprodukte angezogen, ohne auf wichtige weitere Details wie Verarbeitungseigenschaften, Klebrigkeit, Migration oder Bedruckbarkeit des Endartikels einzugehen. Bekanntermaßen lassen Stearate, wie auch EBS-Wachs als Hilfsmittel bei der Herstellung von Pigmentkonzentraten wegen ihrer hohen Tendenz zur Migration bei den o.g. Temperaturbelastungen deutlich zu wünschen übrig. Auch ist durch die Vielzahl an Komponenten geringen Anteilen der Ansatz zu Fehlermöglichkeiten bei Herstellung und Weiterverarbeitung vorhanden.

EP-A-0 902 045 beschreibt eine Masterbatch-Zusammensetzung, die verbesserte Färbeeigenschaften bei Thermoplasten ergibt, indem ein pigmenthaltiger Masterbatch eingesetzt wird. Die beschriebene Masterbatch-Zusammensetzung enthält ein mit Hilfe von Metallocen-Kontakt hergestelltes Polymer, das durch gute Verträglichkeit mit dem Pigment dessen Dispergierung verbessertern soll. Für ein granuliertes Farbmasterbatch liegt der Pigmentanteil bei maximal 80 %, ohne ein konkretes Beispiel zu nennen. Der Polymergehalt liegt bei maximal 20 % eines mit Hilfe eines Metallocen-Kontakts hergestellten Polymers mit einer Uneinheitlichkeit von max. 3,5. Darüber hinaus enthält die Schrift noch Hinweise auf den Zusatz von weiteren Hilfsmitteln, wie z.B. Antistatika, Antiblock-Additiven und Weichmachern.

Im Stand der Technik wurde das Verfahren zur Herstellung von Farbkonzentraten nicht in zufriedenstellender Weise offenbart, denn Qualitätskriterien wie Farbstärke oder Filterwert bleiben unbeachtet. Es ist mithin nicht zu erkennen, wie und in welchem Umfang die als Vorteil genannte bessere Dispergierung von Pigmenten sich auf solche Qualitätskriterien auswirkt.

Die vorliegender Erfindung zugrunde liegende Aufgabe bestand somit darin, durch geeignete Wahl von Komponenten aus der Gruppe der im folgenden ausgeführten Gruppe von Polyethylenwachsen eine Verbesserung der Dispergierung von Pigmenten, insbesondere organischen Pigmenten, in Polyethylen als Matrix zur Herstellung von Folien zu erzielen.

Überraschenderweise wurde nun gefunden, dass durch Metallocenkatalyse erhaltene Wachse, wie in Anspruch 1 definiert, eine sehr gute Dispergierung von Pigmenten in Polymeren bewirken, und daher zur Herstellung von Masterbatches gut geeignet sind.

Gegenstand der Erfindung ist daher die Verwendung von mittels Metallocenkatalysatoren synthetisierten Polyethylenwachsen als Dispergierhilfsmittel für Pigmente in einer Kunststoff-Matrix wobei die wachse gemäß Definition des Anspruchs 1 verwendet werden.

Ein weiterer Gegenstand der Erfindung ist ein Verfahren zur Herstellung eines Masterbatches durch Abmischung eines Polymers mit einem Färbemittel, gekennzeichnet durch die Zumischung mindestens eines durch Metallocenkatalyse erhaltenen Polyethylenwachses.

Als Polyethylenwachse kommen Homopolymerisate des Ethylens oder Copolymerisate des Ethylens mit einem oder mehreren Olefinen in Frage. Als Olefine werden lineare oder verzweigte Olefine mit 3-18 C-Atomen, vorzugsweise 3-6 C-Atomen, eingesetzt. Beispiele hierfür sind Propen, 1-Buten, 1-Hexen, 1-Octen oder 1-Octadecen, weiterhin Styrol. Bevorzugt sind Copolymere des Ethylens mit Propen oder 1-Buten. Die Copolymere bestehen zu 70 bis 99,9, bevorzugt zu 80 bis 99 Gew.-% aus Ethylen.

Geeignet sind Polyethylenwachse mit einem Tropfpunkt zwischen 90 und 130°C, bevorzugt zwischen 100 und 120°C, einer Schmelzviskosität bei 140°C zwischen 10 und 10000 mPa·s, bevorzugt zwischen 50 und 5000 mPa·s und einer Dichte bei 20°C zwischen 0,89 und 0,98 $g/cm^3$, bevorzugt zwischen 0,91 und 0,94 $g/cm^3$.

Die Wachse können sowohl als solche als auch in polar modifizierter Form eingesetzt werden. An sich bekannte Möglichkeiten zur Modifikation sind beispielsweise die Oxidation mit Luft oder die Pfropfpolymerisation mit polaren Monomeren, beispielsweise Maleinsäureanhydrid.

In bevorzugten Ausführungsformen der Erfindung werden die erfindungsgemäß verwendeten Metallocen-Wachse in Abmischung mit Hilfs- und Zusatzstoffen verwendet, die die Dispergierwirkung der Metallocenwachse verbessern. Solche Hilfs- und Zusatzstoffe umfassen beispielsweise

a) Polyethylenglykol
b) PE-Wachsen,
c) PTFE-Wachsen,
d) PP-Wachsen,
e) Amidwachsen,
f) FT-Paraffinen,
g) Montanwachsen,
h) natürliche Wachsen,
i) makro- und mikrokristallinen Paraffinen,
j) polare Polyolefinwachse, oder
k) Sorbitanestern
l) Polyamiden
m) Polyolefinen
n) PTFE
o) Netzmittel
p) Silikate

Bei Zusatzstoff a) handelt es sich um Polyethylenglykol, Molekulargewichtsbereich vorzugsweise 10 bis 50000 Dalton, insbesondere 20 bis 35000 Dalton. Das Polyethylenglykol wird in Mengen von vorzugsweise bis zu 5 Gew.-% der metallocenwachshaltigen Zusammensetzung zugemischt.

Bei Zusatzstoff b) handelt es sich in bevorzugten Ausführungsformen um Polyethylen-Homo- und Copolymerwachse, die nicht mittels Metallocenkatalyse hergestellt wurden, und die ein zahlenmittleres Molekulargewicht von 700 bis 10.000 g/mol bei einem Tropfpunkt zwischen 80 und 140°C aufweisen.

Bei Zusatzstoff c) handelt es sich in bevorzugten Ausführungsformen um Polytetrafluoroethylen mit einem Molekulargewicht zwischen 30.000 und 2.000.000 g/mol, insbesondere zwischen 100.000 und 1.000.000 g/mol.

Bei Zusatzstoff d) handelt es sich in bevorzugten Ausführungsformen um Polypropylen-Homo- und Copolymerwachse, die nicht mittels Metallocenkatalyse hergestellt wurden, und die ein zahlenmittleres Molekulargewicht von 700 bis 10.000 g/mol bei einem Tropfpunkt zwischen 80 und 160°C aufweisen.

Bei Zusatzstoff e) handelt es sich in bevorzugten Ausführungsformen um Amidwachse, herstellbar durch Umsetzung von Ammoniak oder Ethylendiamin mit gesättigten und/oder ungesättigten Fettsäuren. Bei den Fettsäuren handelt es sich zum Beispiel um Stearinsäure, Talgfettsäure, Palmitinsäure oder Erucasäure.

Bei Zusatzstoff f) handelt es sich in bevorzugten Ausführungsformen um FT-Paraffine mit einem zahlenmittleren Molekulargewicht von 400 bis 800 g/mol bei einem Tropfpunkt von 80 bis 125°C.

Bei Zusatzstoff g) handelt es sich vorzugsweise um Montanwachse einschließlich Säure- und Esterwachsen mit einer Kohlenstoffkettenlänge der Carbonsäure von $C_{22}$ bis $C_{36}$. Bei den Esterwachsen handelt es sich vorzugsweise um Umsetzungsprodukte der Montansäuren mit ein oder mehrwertigen Alkoholen mit 2 bis 6 C-Atomen, wie zum Beispiel Ethandiol, Butan-1,3-diol oder Propan-1,2,3-triol.

Bei Zusatzstoff h) handelt es sich in einer bevorzugten Ausführungsform um Camaubawachs oder Candelillawachs.

Bei Zusatzstoff i) handelt es sich um Paraffine und mikrokristalline Wachse, welche bei der Erdölraffination anfallen. Die Tropfpunkte solcher Paraffine liegen vorzugsweise zwischen 45 und 65°C, die solcher mikrokristallinen Wachse vorzugsweise zwischen 73 und 100°C.

Bei Zusatzstoff j) handelt es sich in bevorzugten Ausführungsformen um polare Polyolefinwachse, herstellbar durch Oxidation von Ethylen- oder Propylen-Homopolymer- und -Copotymerwachsen oder deren Pfropfung mit Maleinsäureanhydrid. Besonders bevorzugt wird hierfür von Polyolefinwachse mit einem Tropfpunkt zwischen 90 und 165°C, insbesondere zwischen 100 und 160°C, einer Schmelviskosität bei 140°C (Polyethylenwachse) bzw. bei 170°C (Polypropylenwachse) zwischen 10 und 10000 mPas, insbesondere zwischen 50 und 5000 mPas und einer Dichte bei 20°C zwischen 0,85 und 0,96 g/cm$^3$ ausgegangen.

Bei Zusatzstoff k) handelt es sich in bevorzugten Ausführungsformen um Umsetzungsprodukte von Sorbit (Sorbitol) mit gesättigten und/oder ungesättigten Fettsäuren und/oder Montansäuren. Bei den Fettsäuren handelt es sich zum Beispiel um Stearinsäure, Talgfettsäure, Palmitinsäure oder Erucasäure.

Bei Zusatzstoff l) handelt es sich um vorzugsweise gemahlene Polyamide, beispielsweise Polyamid-6 , Polyamid-6,6 oder Polyamid-12. Die Partikelgrösse der Polyamide liegt vorzugsweise im Bereich von 5-200 μm, insbesondere 10-100 μm.

Bei Zusatzstoff m) handelt es sich um Polyolefine, also beispielsweise Polypropylen, Polyethylen oder Copolymere aus Propylen und Ethylen hoher oder niedriger Dichte mit Molgewichten von vorzugsweise 10.000 bis 1.000.000 D, insbesondere 15.000 bis 500.000 D als Zahlenmittel für das Molekulargewicht, deren Partikelgrösse durch Mahlung im Bereich von vorzugsweise 5-200 μm, insbesondere 10-100 μm liegt.

Bei Zusatzstoff n) handelt es sich um thermoplastisches PTFE mit einem Molgewicht von vorzugsweise 500.000 - 10.000.000 D, insbesondere 500.000 - 2.000.000 D als Zahlenmittel , dessen Partikelgrösse durch Mahlung im Bereich von vorzugsweise 5-200 μm, insbesondere 10-100 μm liegt.

Bei Zusatzstoff o) handelt es sich um amphiphile Verbindungen, welche im Allgemeinen die Oberflächenspannung von Flüssigkeiten senken. Bei den Netzmitteln handelt es sich zum Beispiel um Alkylethoxylate, Fettalkoholethoxolate, Alkylbenzolsulfonate oder Betaine.

Bei Zusatzstoff p) handelt es sich um Silikate, welche nicht als Füllstoff oder Pigment in den Rezepturen eingesetzt werden. Bevorzugt werden Kieselsäuren oder Talkum eingesetzt.

Das Mischungsverhältnis von Bestandteil a) zu den Bestandteilen b) bis p) kann im Bereich von 1 bis 99 Gew.-% a) zu 1 bis 99 Gew.% b) bis p) variiert werden. Wird eine Mischung aus mehreren der Bestandteile b) bis p) verwendet, so gilt die Mengenangabe für die Summe aus den Mengen dieser Bestandteile.

Die Wachse werden in mikronisierter Form für den erfindungsgemäßen Zweck verwendet. Beansprücht ist die Verwendung von Polyethylenwachs und gegebenenfalls zugemischten Hilfs- und Zusatzstoffen als Ultra-Feinstpulver mit einer Partikelgrößenverteilung $d_{90} < 40$ μm.

Besonders bevorzugt ist die erfindungsgemäße Verwendung von Polyethylenwachsen zur Herstellung von Farbkonzentraten für Polypropylen-Fasern.

Metallocenkatalysatoren zur Herstellung der Polyethylenwachse sind chirale oder nichtchirale Übergangsmetallverbindungen der Formel $M^1L_x$. Die Übergangsmetallverbindung $M^1L_x$ enthält mindestens ein Metallzentralatom $M^1$, an das mindestens ein Π-Ligand, z.B. ein Cyclopentadienylligand gebunden ist. Darüber hinaus können Substituenten, wie z.B. Halogen-, Alkyl-, Alkoxy- oder Arylgruppen an das Metallzentralatom $M^1$ gebunden sein. $M^1$ ist bevorzugt ein Element der III., IV., V. oder VI. Hauptgruppe des Periodensystems der Elemente, wie Ti, Zr oder Hf. Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die Π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, sogenannte mehrkernige Metallocene. Diese können beliebige Substitutionsmuster und Verbrückungsvarianten aufweisen. Die einzelnen Metallocenfragmente solcher mehrkemigen Metallocene können sowohl gleichartig als auch voneinander verschieden sein. Beispiele für solche mehrkemigen Metallocene sind z.B. beschrieben in EP-A-632 063.

Beispiele für allgemeine Strukturformeln von Metallocenen sowie für deren Aktivierung mit einem Cokatalysator sind u.a. in EP-A-571 882 gegeben.

Beispiele:

Die Schmelzviskositäten der nachfolgend verwendeten Wachse wurden mit einem Rotationsviskosimeter entsprechend DGF-M-III 8 (57), die Tropfpunkte entsprechend DGF-M-III 3(75) (Normen der Deutschen Gesellschaft für Fettwissenschaft), die Dichten entsprechend DIN 53479 ermittelt.

Zur Definition der Qualität der Dispergierung eines Pigments in der Polyolefinmatrix wird in der Folge der Filterwert verwandt , der wie folgt definiert ist:

$$D_F = (p_{max}-p_0)/m_{pigment}$$

Der Filterwert nach dieser Definition gibt also das Ausmaß des Druckanstieges durch Filtration einer bestimmten dispergierten Pigmentmenge wieder, mithin also das Maß der "Blockierung" des Filters durch undispergiertes oder schlecht dispergiertes Pigment, bezogen auf die eingesetzte Pigmentmenge.

Bei der Herstellung der beispielsgemäßen Pigmentmasterbatches wird ein Henschel-Mischer FM 10 eingesetzt, der typischerweise 4 bis 10 Minuten (bei Raumtemperatur) mit 600 bis 1500 Umdrehungen/min für eine statistische Verteilung der Einsatzkomponenten sorgt. Die eigentliche Dispergierung (typischerweise einer in einer iPP-Matrix) findet in einem gleichläufigen Zweischneckenextruder mit einer Verfahrensteillänge von 30 bis 48 D statt, der mit einem Temperaturprofil von 30 bis 230°C (Einzug -> Düse) arbeitet. Die Umdrehungszahl liegt zwischen 100 bis 550 Umdrehungen/Minute, es wird mit einem Durchsatz von 4 bis 30 kg/h gearbeitet.

In der folgenden Tabelle werden die Beispiele bei erfindungsgemäßem Vorgehen, bzw. Vergleichsbeispiele nach dem Stand der Technik, dargestellt:

| Rezepturbestandteil | 1 | 2 | 3 | 4 (Vergleich) | 5 (Vergleich) | 6 (Vergleich) |
|---|---|---|---|---|---|---|
| Polyethylen Wachs | HBM 418/2 | HBM 352/2 | HBM C2-ox | Hiwax® 420 | Luwax® A | AC 629 |
| Hersteller | Clariant | Clariant | Clariant | Mitsui | BASF | Allied Signal |
| Typ | Metallocen | Metallocen | Metallocen | Ziegler-PE | LD-PE | Ox. LD-PE |
| Gehalt | 30 % (wt.) | 30 % (wt.) | 30 % (wt.) | 30 % (wt.) | 30 % (wt.) | 30 % (wt.) |
| Pigment | 30 % Pigment Blue 15:1 | 30 % Pigment Blue 15:1 | 30 % Pigment Blue 15:1 | 30 % Pigment Blue 15:1 | 30 % Pigment Blue 15:1 | 30% Pigment Blue 15:1 |
| Polyolefin | Escorene® LL 6101 | Escorene LL 6101 | Escorene LL 6101 | Escorene LL 6101 | Escorene LL 6101 | Escorene LL 6101 |
| Filterwert | 3,4 | 3,6 | 3,4 | 4,6 | 4,8 | 4,6 |

**Patentansprüche**

1.   Verwendung von mittels Metallocenkatalysatoren synthetisierten Polyethylenwachsen mit einer Schmelzviskosität bei 140 °C von 10 bis 10 000 mPa·s als Dispergierhilfsmittel für organische Pigmente in einer Kunststoff-Matrix, wobei das Polyethylenwachs als Ultra-Feinstpulver mit einer Partikelgröße von $d_{90} < 40$ μm vorliegt.

2.   Verwendung gemäß Anspruch 1, worin das Polyethylenwachs einen Tropfpunkt von 90 bis 130 °C und eine Dichte von 0,89 bis 0,98 $g/cm^3$ aufweist.

**3.** Verwendung gemäß Anspruch 1 oder 2, worin das Polyethylenwachs polar modifiziert ist.

**4.** Verwendung gemäß einem oder mehreren der Ansprüche 1 bis 3, worin das Polyethylenwachs in Abmischung mit einem oder mehreren Hilfs- und Zusatzstoffen, ausgewählt aus der Gruppe bestehend aus

    a) Polyethylenglykol
    b) PE-Wachse,
    c) PTFE-Wachse,
    d) PP-Wachse,
    e) Amidwachse,
    f) FT-Paraffine,
    g) Montanwachse,
    h) natürliche Wachse,
    i) makro- und mikrokristalline Paraffine,
    j) polare Polyolefinwachse,
    k) Sorbitanester,
    l) Polyamide,
    m) Polyolefine,
    n) PTFE,

im Gewichtsverhältnis Polyethylenwachs zu Hilfs- und Zusatzstoff im Bereich von 1 : 99 bis 99 : 1 vorliegt.

**5.** Verwendung gemäß einem oder mehreren der Ansprüche 1 bis 4, worin die zugemischten Hilfs- und Zusatzstoffe als Ultra-Feinstpulver mit einer Partikelgröße von $d_{90}$ < 40 µm vorliegen.

**6.** Verfahren zur Herstellung eines Masterbatches durch Abmischung eines Polymers mit einem Färbemittel, **gekennzeichnet durch** die Zumischung mindestens eines **durch** Metallocenkatalyse erhaltenen Polyethylenwachses wie in Anspruch 1 definiert.

**Claims**

**1.** The use of polyethylene waxes having a melt viscosity at 140°C of from 10 to 10 000 mPa·s and synthesized by means of metallocene catalysts as dispersing auxiliaries for pigments in a polymer matrix, the polyethylene wax being present in the form of an ultrafine powder having a particle size of $d_{90}$ < 40 µm.

**2.** The use as claimed in claim 1, wherein the polyethylene wax has a dropping point of from 90 to 130°C and a density of from 0.89 to 0.98 g/cm$^3$.

**3.** The use as claimed in claim 1 or 2, wherein the polyethylene wax has been polar-modified.

**4.** The use as claimed in one or more of claims 1 to 3, wherein the polyethylene wax is present as a blend of one or more auxiliaries and additives selected from the group consisting of

    a) polyethylene glycol
    b) PE waxes
    c) PTFE waxes
    d) PP waxes
    e) amide waxes
    f) FT paraffins
    g) montan waxes
    h) natural waxes
    i) macrocrystalline and microcrystalline paraffins,
    j) polar polyolefin waxes,
    k) sorbitan esters
    l) polyamides
    m) polyolefins
    n) PTFE,

in a polyethylene wax : auxiliary and additive weight ratio of from 1:99 to 99:1.

**5.** The use as claimed in one or more of claims 1 to 4, wherein the admixed auxiliaries and additives are present in the form of an ultrafine powder having a particle size $d_{90} < 40$ μm.

**6.** A process for producing a masterbatch by blending a polymer with a colorant, **characterized by** the admixing of at least one polyethylene wax obtained by metallocene catalysis as defined in claim 1.

**Revendications**

**1.** Utilisation de cires de polyéthylène synthétisées par des catalyseurs à base de métallocènes, ayant une viscosité à l'état fondu à 140°C de 10 à 10 000 mPa.s, en tant qu'auxiliaires de dispersion pour des pigments organiques dans une matrice de matière plastique, la cire de polyéthylène se présentant sous forme d'une poudre ultrafine ayant une granulométrie $d_{90} < 40$ μm.

**2.** Utilisation selon la revendication 1, pour laquelle la cire de polyéthylène présente un point de goutte de 90 à 130°C et une masse volumique de 0,89 à 0,98 g/cm$^3$.

**3.** Utilisation selon la revendication 1 ou 2, pour laquelle la cire de polyéthylène a subi une modification polaire.

**4.** Utilisation selon l'une ou plusieurs des revendications 1 à 3, pour laquelle la cire de polyéthylène se présente en mélange avec un ou plusieurs adjuvants et additifs choisis dans le groupe comprenant

a) le polyéthylèneglycol,
b) les cires de PE,
c) les cires de PTFE,
d) les cires de PP,
e) les cires d'amide,
f) les paraffines FT,
g) les cires de montagne,
h) les cires naturelles,
i) les paraffines macro- et microcristallines,
j) les cires de polyoléfine polaires,
k) les esters du sorbitan,
l) les polyamides,
m) les polyoléfines,
n) le PTFE,

le rapport en poids de la cire de polyéthylène à l'adjuvant et additif étant compris dans la plage de 1:99 à 99:1.

**5.** Utilisation selon l'une ou plusieurs des revendications 1 à 4, pour laquelle les adjuvants et additifs mélangés se présentent sous forme d'une poudre ultrafine ayant une granulométrie $d_{90} < 40$ μm.

**6.** Procédé de préparation d'un mélange-maître par mélange d'un polymère et d'un colorant, **caractérisé en ce qu'**on ajoute, en mélangeant, au moins une cire de polyéthylène, telle que définie dans la revendication 1, obtenue par catalyse à l'aide d'un métallocène.